# EUROPEAN PATENT APPLICATION

(11) **EP 1 758 217 A2**
(43) Date of publication of application: **28.02.2007**
(21) Application number: 06017568.4
(22) Date of filing: 23.08.2006
(51) Int. Cl.: H01S 5/022

(54) **Optical apparatus having a laser light source unit, and image recording apparatus**

(30) Priority: 24.08.2005 JP 2005242796; 28.09.2005 JP 2005282205; 28.02.2006 JP 2006053201
(71) Applicant: Fuji Photo Film Co., Ltd., Minami-Ashigara-shi, Kanagawa (JP)
(72) Inventor: Matsuoka, Hiroshi c/o Fuji Photo Film Co.Ltd., Kanagawa (JP)
(74) Representative: Klunker . Schmitt-Nilson . Hirsch

(57) **Abstract**

There is provided an optical apparatus having a laser light source unit including: a laser light source unit (12) structured so as to make laser light, which is emitted at a semiconductor laser fixed within a housing, into a laser beam and emit the laser beam; a holding member (48) to which the housing of the laser light source unit is mounted via a temperature control portion; and a displacement avoiding portion structured between the holding member (48) and the housing of the laser light source unit, so as to suppress offset of at least an angle of an optical axis of a laser beam emitted from the laser light source unit at a time when temperature control, which maintains the housing of the laser light source unit at a predetermined temperature, is carried out at the temperature control portion.

## Description

### BACKGROUND

### Technical Field

The present invention relates to an optical apparatus having a laser light source unit which emits a laser beam in a predetermined direction and is mounted on a holding member via a temperature control portion, and to an image recording apparatus.

### Related Art

Generally, among optical scanning apparatuses provided at an optical apparatus such as a digital copier or a laser printer or the like, there are optical scanning apparatuses carrying out operation as follows. A laser beam emitted from a semiconductor laser light source is converted into parallel light by a collimator lens. The laser beam which has been made into parallel light is imaged as a line image which is long in a direction corresponding to the main scanning, and is deflected at a uniform angular velocity by a light deflector having deflecting/reflecting surfaces in a vicinity of the imaging position of the line image. Thereafter, the deflected laser beam is collected onto a surface-to-be-scanned by an imaging optical system, and optical scanning of the surface-to-be-scanned is carried out.

Among such optical apparatuses, there are those using a light source unit having a structure in which a collimator lens is set near and made integral with the light-emitting surface of the semiconductor laser light source, in order to efficiently collect the laser light emitted at the semiconductor laser light source and to make the laser light exit in a predetermined direction after it has been made into parallel light.

As disclosed in Japanese Patent Application Laid-Open (JP-A) No. 9-73056, there has conventionally been proposed a structure in which, at an optical apparatus provided with a light source unit, in order to oscillate a semiconductor laser in a stable state and obtain a stable collimated beam by keeping the temperature of the entire light source unit constant, the light source unit is mounted to a heat sink (radiator) via a Peltier element (heat exchange element), and this heat sink is structured as the holding member of the light source unit.

As described above, by energizing the Peltier element, temperature control with respect to the light source unit which is mounted to the holding member via the Peltier element is carried out, and the light source unit is maintained at a constant temperature.

However, it is easy for the temperature of a holding member serving as a radiator to fluctuate due to the temperature of the surrounding environment and the heat exchange operation of the Peltier element. For example, in a case in which the environmental temperature is higher than the set temperature of the light source unit, the light source unit is cooled by the Peltier element, whereas the temperature of the holding member becomes higher than the temperature of the light source unit because the holding member is heated. Conversely, in a case in which the environmental temperature is lower than the set temperature of the light source unit, because the holding member is cooled whereas the light source unit is heated, the temperature of the holding member is lowered.

In this way, when temperature control with respect to the light source unit is carried out, the states of thermal expansion of the light source unit and the holding member vary in accordance with changes in the environmental temperature. Therefore, a temperature difference arises between the light source unit and the holding member. Due to this temperature difference, the light source unit is affected by the thermal strain arising at the time when the light source unit expands or contracts with respect to the holding member, and deforms. The posture at which the light source unit is held at the holding member also changes. Therefore, the optical axis of the laser beam exiting from the light source tilts with respect to a predetermined exiting direction, and the problem that the beam position fluctuates arises. (Due to the fluctuations in the beam position, the alignment of the optical system is thrown off, and aberration and eclipse arise. Therefore, the beam quality deteriorates, and there is the concern that the image quality of an image formed on a photosensitive material will be deteriorated.)

In view of the aforementioned, an object of the present invention is to newly provide an optical apparatus having a laser light source unit, and an image recording apparatus, which emit a laser beam such that the optical axis of the laser beam exiting from a light source unit does not tilt, even in cases in which a temperature difference arises between the light source unit and a holding member due to temperature control being carried out with respect to the light source unit which is mounted on the holding member.

### SUMMARY

The present invention has been made in view of the above circumstances and provides an optical apparatus having a laser light source unit, and an image recording apparatus, which emit a laser beam without tilting of the optical axis of the laser beam exiting from a light source unit due to temperature control being carried out with respect to the light source unit which is mounted on a holding member.

### BRIEF DESCRIPTION OF THE DRAWINGS

Preferred embodiments of the present invention will be described in detail based on the following figures, wherein:
Fig. 1 is a schematic perspective view showing main portions of an image recording apparatus relating to a first embodiment of the present invention;
Fig. 2 is a front view showing a state in which a light source unit of an optical apparatus relating to the first embodiment of the present invention is mounted on a holding member;
Fig. 3 is a left side view showing the state in which the light source unit of the optical apparatus relating to the first embodiment of the present invention is mounted on the holding member;
Fig. 4 is a plan view showing the state in which the light source unit of the optical apparatus relating to the first embodiment of the present invention is mounted on the holding member;
Fig. 5 is an exploded perspective view showing respective portions for mounting the light source unit of the optical apparatus relating to the first embodiment of the present invention on the holding member;
Fig. 6 is an exploded perspective view showing another structure for mounting the light source unit of the optical apparatus relating to the first embodiment of the present invention on the holding member;
Fig. 7 is an exploded perspective view showing yet another structure for mounting the light source unit of the optical apparatus relating to the first embodiment of the present invention on the holding member;
Fig. 8 is an exploded perspective view showing still another structure for mounting the light source unit of the optical apparatus relating to the first embodiment of the present invention on the holding member;
Fig. 9 is an exploded perspective view showing still yet another structure for mounting the light source unit of the optical apparatus relating to the first embodiment of the present invention on the holding member;
Fig. 10 is an exploded perspective view showing another structure for mounting the light source unit of the optical apparatus relating to the first embodiment of the present invention on the holding member;
Fig. 11 is a plan view showing yet another structure for mounting the light source unit of the optical apparatus relating to the first embodiment of the present invention on the holding member;
Fig. 12 is an explanatory diagram schematically showing the determining, by a simulation, of the state of deformation arising at the time when the light source unit is heated and thermally expands and the holding member is cooled and thermally contracts, in a case in which the light source unit is fixed on the holding member;
Fig. 13 is a side view explanatory diagram schematically showing the determining, by a simulation, of the state of deformation arising at the time when the light source unit is heated and thermally expands and the holding member is cooled and thermally contracts, in a case in which the light source unit is fixed on the holding member;
Fig. 14 is an exploded perspective view showing respective portions for mounting, on a holding member, a light source unit of an optical apparatus and an image recording apparatus relating to a second embodiment of the present invention;
Fig. 15 is a vertical sectional view showing a state in which the light source unit of the optical apparatus and the image recording apparatus relating to the second embodiment of the present invention is mounted on the holding member;
Fig. 16 is a vertical sectional view showing a state in which the light source unit of the optical apparatus and the image recording apparatus relating to the second embodiment of the present invention is mounted on the holding member, and a Peltier element is deformed;
Fig. 17 is a perspective view showing another example of slits formed in a base member used in the optical apparatus and the image recording apparatus relating to the second embodiment of the present invention;
Fig. 18 is an exploded perspective view showing respective portions for mounting, on a holding member, a light source unit of an optical apparatus relating to a third embodiment of the present invention;
Fig. 19 is a front view showing a state in which the light source unit of the optical apparatus relating to the third embodiment of the present invention is mounted on the holding member;
Fig. 20 is a plan view showing a state in which the light source unit of the optical apparatus relating to the third embodiment of the present invention is mounted on the holding member, and thermal deformation has arisen;
Fig. 21 is a side view showing a state in which the light source unit of the optical apparatus relating to the third embodiment of the present invention is mounted on the holding member, and a Peltier element has deformed so as to become convex upwardly;
Fig. 22 is a side view showing a state in which the light source unit of the optical apparatus relating to the third embodiment of the present invention is mounted on the holding member, and the Peltier element has deformed so as to become concave downwardly;
Fig. 23 is an exploded perspective view showing another structural example for mounting the light source unit of the optical apparatus relating to the third embodiment of the present invention on the holding member; and
Fig. 24 is an exploded perspective view showing yet another structural example for mounting the light source unit of the optical apparatus relating to the third embodiment of the present invention on the holding member.

### DETAILED DESCRIPTION

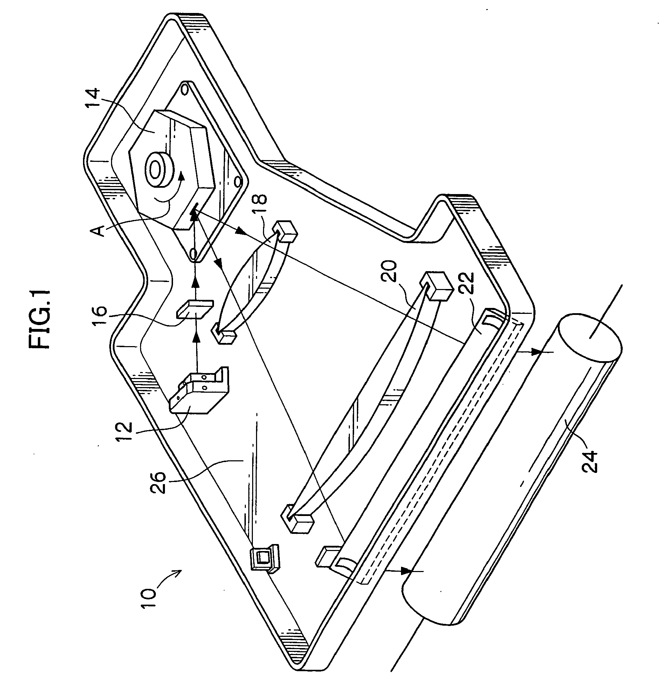

A first embodiment of an optical apparatus having a laser light source unit, and an image recording apparatus, relating to the present invention will be described with reference to Figs. 1 through 13.

Fig. 1 is a schematic structural perspective view showing main portions of an image recording apparatus 10 which serves as an example of an optical apparatus having a laser light source unit of the present invention.

The image recording apparatus 10 is structured to have a light source unit 12 which emits a laser beam (light beam) having a predetermined color wavelength and a predetermined output, a polygon mirror 14 rotating in the direction of arrow A, a first cylindrical lens 16, an fθ lens 18, a second cylindrical lens 20, and a reflecting mirror 22 disposed in the main scanning direction of the laser beam.

These structural elements are disposed at predetermined positions within a case 26, so as to structure an optical system which illuminates the laser beam, which exits from the light source unit 12, to a predetermined position on a photosensitive drum 24.

In the image recording apparatus 10, a laser beam which includes image information is emitted from the light source unit 12 and is adjusted, and thereafter, is incident on the polygon mirror 14 which rotates at a constant speed. After passing through the fθ lens 18 in order to carry out adjustment for scanning, the laser beam is, via the second cylindrical lens 20, reflected at the reflecting mirror 22 and incident on the photosensitive drum 24.

In the image recording apparatus 10, due to the movement of the photosensitive drum 24 and the deflection due to the rotation of the polygon mirror 14, the photosensitive drum 24 is scan-exposed by the laser beam, such that an electrostatic latent image is formed on the photosensitive drum 24. The electrostatic latent image is developed by toner. Due to the toner image being transferred onto a transfer medium such as a recording sheet or the like, an image is formed and recorded.

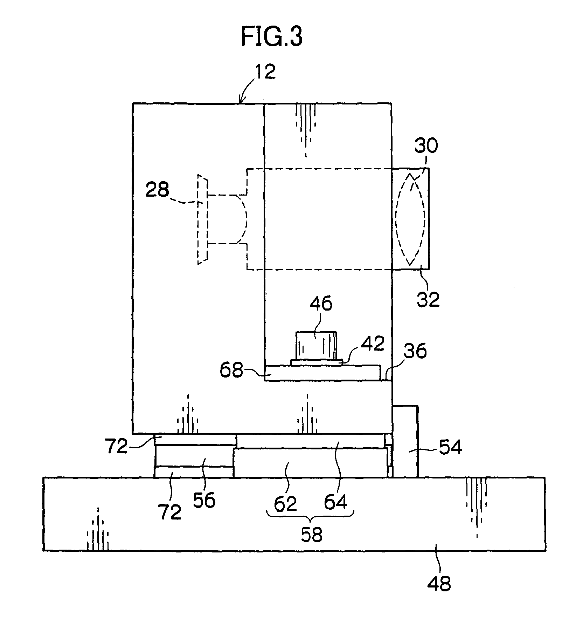

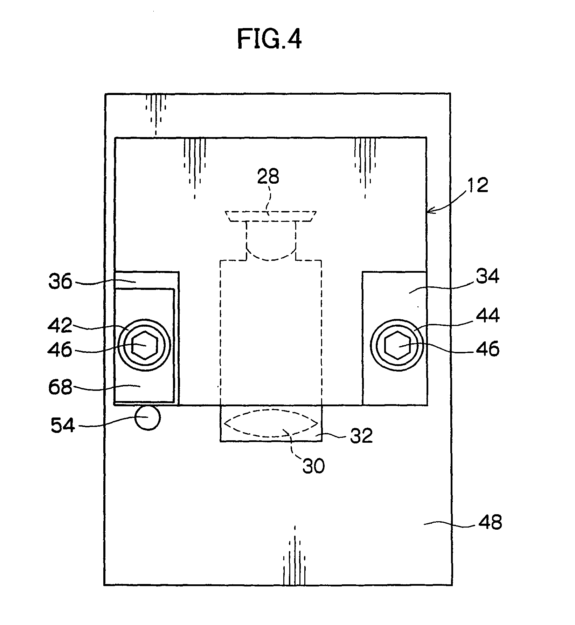

As shown in Figs. 3 and 4, the light source unit 12 mounted in the image recording apparatus 10 is structured integrally by a semiconductor laser 28, which emits a laser beam, and a collimator lens 30, which converts the laser beam emitted by the semiconductor laser 28 into parallel light, being disposed within a housing of the light source unit 12 such that the optical axes thereof coincide.

The semiconductor laser 28 is disposed at one end side (the left side in Fig. 3) of the interior of the housing of the light source unit 12. A lens barrel 32, which accommodates therein the collimator lens 30 which converts the laser beam emitted by the semiconductor laser 28 into parallel light, is provided at the other end side (the right side in Fig. 3).

Due to the collimator lens 30 and the semiconductor laser 28 being disposed near to one another with a predetermined short interval therebetween, the light source unit 12 is structured so as to aim for efficient collection, via the collimator lens 30, of the light emitted by the semiconductor laser 28, as well as compactness of the members and a reduction in the number of members.

The housing of the light source unit 12 is fastened on a holding member (platen) 48 via a displacement avoiding portion. The holding member 48 may be structured as a portion of the case 26 of the image recording apparatus 10 for placement of the housing of the light source unit 12.

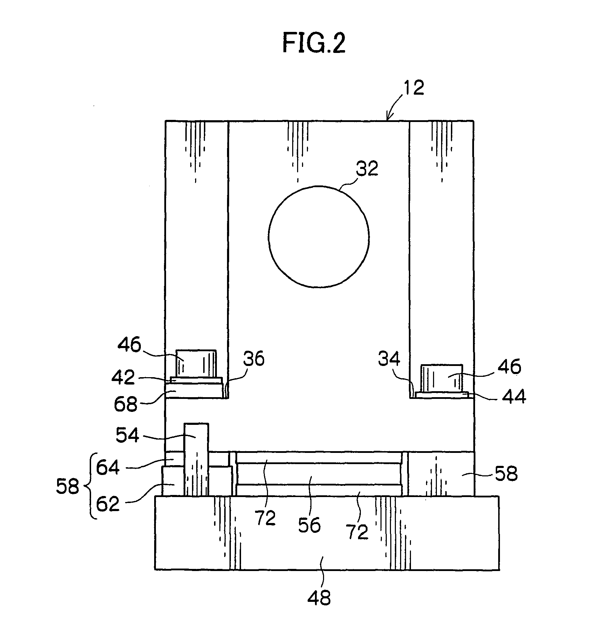

As shown in Figs. 2 through 5, portions, at the both sides of the front surface where the lens barrel 32 is provided at the substantially parallelepiped housing main body of the light source unit 12, are cut-out in the shapes of small rectangles such that two pedestal portions 34, 36, which are formed in the shapes of small, rectangular base plates, are formed thereat.

In order to structure the aforementioned displacement avoiding portion, an insert-through hole 38, which is a through hole for fixing, is formed in the one pedestal portion 34 (the pedestal portion at the right side in Figs. 2, 4 and 5), and a play-insertion hole 40, which is a through hole for insertion with play, is formed in the other pedestal portion 36.

The insert-through hole 38 for fixing is formed to a size such that a screw part 46 is inserted therethrough, and such that, at the time of fastening the light source unit 12 to the holding member through the screw part 46, the position of the light source unit 12 can be fixed so as to not fluctuate.

The play-insertion hole 40 for insertion with play is formed to a size which is such that the screw part 46 is inserted therethrough, and which has leeway of a range which allows fluctuations in the fastened position at the time when the housing main body of the light source unit 12 thermally expands or thermally contracts and allows fluctuations in the fastened position at the time when positioning is carried out by using the insert-through hole 38 for fixing as a reference.

Further, in order to structure the displacement avoiding portion, a screw hole 50, which is for the screwing-in of the screw part 46 which passes through the insert-through hole 38 for fixing, and a screw hole 52, which is for the screwing-in of the screw part 46 which passes through the play-insertion hole 40 for insertion with play, are formed at predetermined positions of the holding member (platen) 48 which is fastened with the housing of the light source unit 12 which is structured as described above.

A positioning pin 54, which serves as a guide portion for abutting and positioning the front end surface of the housing main body of the light source unit 12, stands erect at a predetermined position of the holding member 48 near the screw hole 52.

The light source unit 12 is disposed on the holding member 48 via the displacement avoiding portion and a temperature control portion. The temperature control portion can be structured by using a Peltier element 56 and thermally insulating members 58 which suppress heat conduction. Note that, in the present embodiment, the temperature control portion is structured by simultaneously using both the Peltier element 56 and the thermally insulating members 58, but the temperature control portion may be structured by only the Peltier element 56.

The thermally insulating members 58 function as spacers which keep the interval between the holding member 48 and the housing of the light source unit 12 constant. The thermally insulating members 58 are formed of a material having low heat conductivity such as ceramic or the like, and prevent heat conduction between the holding member 48 and the housing of the light source unit 12.

The one thermally insulating member 58, which is disposed at the portion of the insert-through hole 38 for fixing, is formed by a rectangular member having a thickness corresponding to the set interval between the holding member 48 and the housing of the light source unit 12. An insert-through hole 60 for the screw part 46 is formed in the central portion of the thermally insulating member 58.

Further, in order to structure the displacement avoiding portion, the other thermally insulating member 58 which is disposed at the play-insertion hole 40 side is formed in the shape of a rectangle having a thickness corresponding to the set interval between the holding member 48 and the housing of the light source unit 12 (the same thickness as the one thermally insulating member 58), by a combination of a spacer 62 for thermal insulation and a slide plate 64. Insert-through holes 60, 66 for the screw part 46 are formed so as to communicate with one another in the central portions of the spacer 62 for thermal insulation and the slide plate 64. Note that the slide plate 64 may be structured by a metal plate.

Further, in order to structure the displacement avoiding portion, an auxiliary slide plate 68 is disposed on the pedestal portion 36, at which the play-insertion hole 40 is provided, at the housing of the light source unit 12. An insert-through hole 70 for the screw part 46, which communicates with the play-insertion hole 40, is formed in the central portion of the auxiliary slide plate 68.

Washers 42, 44, which are formed of metal or plastic, are disposed on the auxiliary slide plate 68, which is disposed at the pedestal portion 36 side where the play-insertion hole 40 is provided, and on the pedestal portion 34 at which the insert-through hole 38 for fixing is provided.

When the light source unit 12 is to be mounted on the holding member 48, first, one of the screw parts 46 is passed through the washer 44, the insert-through hole 38 for fixing at the housing of the light source unit 12, and the insert-through hole 60 of the thermally insulating member 58, and is screwed-into and fastened to the screw hole 50 of the holding member 48.

Next, rotational adjustment is carried out with respect to the light source unit 12, such that the front end portion of the housing of the light source unit 12 is made to abut the positioning pin 54 which serves as a guide portion, in the state in which the one screw part 46 is fastened to the screw hole 50, and positioning of the light source unit 12 in the rotational direction around the screw hole 50 is carried out.

Then, when the other screw part 46 for structuring the displacement avoiding portion is to be fastened, this other screw part 46 is passed through the washer 42, the insert-through hole 70 of the auxiliary slide plate 68, the play-insertion hole 40 for insertion with play of the pedestal portion 36, the insert-through hole 66 of the slide plate 64, and the insert-through hole 60 of the spacer 62 for thermal insulation, and is screwed-into and fastened to the screw hole 52 of the holding member 48.

In this case, by applying a lubricant such as high pressure grease or the like to the surfaces of sliding contact between the slide plate 64 and the spacer 62 for thermal insulation, sliding is easily carried out between the slide plate 64 and the spacer 62 for thermal insulation via the lubricant at the time when slight displacement arises between the holding member 48 and the housing of the light source unit 12. Therefore, it is possible to prevent stress, which deforms or tilts the housing of the light source unit 12, from working.

Note that the lubricant such as high pressure grease or the like may be applied between the slide plate 64 and the bottom surface of the housing of the light source unit 12, and between the surface of the pedestal portion 36 and the auxiliary slide plate 68.

For example, a high pressure grease product which contains particulates ("NEVER-SEEZ" manufactured by Bostik), or a high-temperature, high pressure-resistant grease which contains metal particulates of copper, nickel, stainless, or the like, can be used as the lubricant such as high pressure grease or the like which is used here.

As shown in Figs. 2 through 5, in the image recording apparatus 10, the Peltier element 56 which serves as the temperature control portion is disposed so as to be able to move a slight distance, between the holding member 48 and the housing of the light source unit 12 in the state of being nipped between a pair of flexible gaskets 72. (The pair of flexible gaskets 72 may be formed by heat radiating sheets which have elasticity, or may be formed such that at least one of the flexible gaskets 72 is replaced with a structure in which silicon grease is applied in the form of a layer of a predetermined thickness.)

In this way, when the flexible gaskets 72 or the like are disposed between the Peltier element 56 and the housing of the light source unit 12 and between the holding member 48 and the Peltier element 56 respectively, by making the surfaces of contact fit closely together by the flexible gaskets 72, it is possible to prevent air layers which have a thermally insulating effect from being interposed, and to improve the efficiency of the conductive heat transfer.

The Peltier element 56 is a heat exchange element which is structured to make one surface low temperature and the other surface high temperature, due to current flowing thereto. When dc current is applied to the Peltier element 56 which is structured by a pair of semiconductor elements which are an N-type semiconductor element and a P-type semiconductor element, the heat radiation amount and the heat absorbing amount vary proportionately to the current.

In the image recording apparatus 10, by controlling the current flowing to the Peltier element 56, temperature control is carried out such that the temperature of the housing of the light source unit 12 is maintained at a predetermined temperature. Note that, at this time, because the housing of the light source unit 12 is insulated from the holding member 48 by the thermally insulating members 58, it is possible for heat exchange to not take place between the holding member 48 and the housing of the light source unit 12, and therefore, the light source unit 12 can efficiently be maintained at a constant temperature.

Further, in the image recording apparatus 10, the Peltier element 56 is disposed so as to be sandwiched between the pair of flexible gaskets 72 in a state in which it can slide by a slight distance. Therefore, even if the Peltier element 56 deforms so as to warp slightly due to changes in its own temperature when current is made to flow to the Peltier element 56, this deformation is absorbed by the pair of flexible gaskets 72, and it is possible to prevent stress which tilts the housing of the light source unit 12 from arising due to this deformation.

In this way, for example, in a case in which the light source unit 12 is heated so as to be maintained at temperature of 30°C by the Peltier element 56 which serves as the temperature control portion, the holding member 48 is cooled by the Peltier element 56 to a temperature which is lower than the air temperature of the atmosphere in which the image recording apparatus 10 is set, and a state arises in which a large temperature difference has arisen between the holding member 48 and the housing of the light source unit 12.

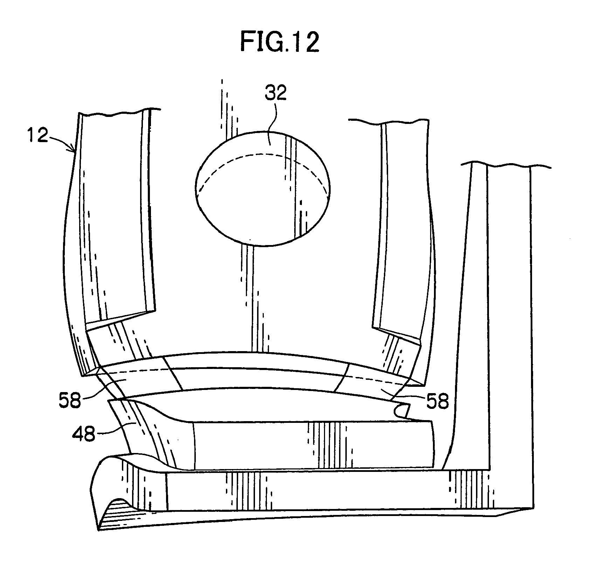

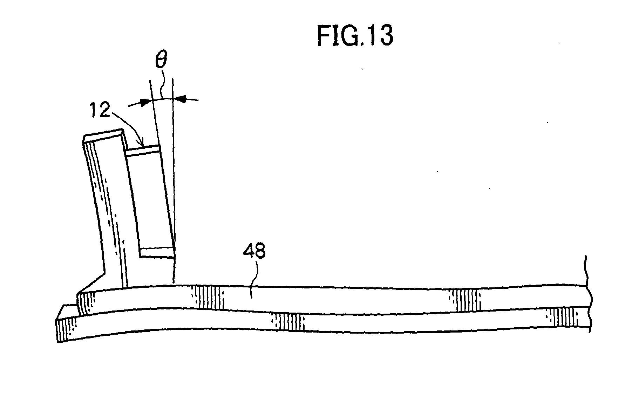

When determining, by a simulation, the state of deformation which arises when the housing of the light source unit 12 is heated and thermally expands and the holding member 48 is cooled and thermally contracts in this state in which a large temperature difference has arisen in a case in which the housing of the light source unit 12 is fixed to the holding member 48 without a displacement avoiding portion being provided, it is clear that the deformation is as schematically shown in Figs. 12 and 13.

In the results of this simulation, because the housing of the light source unit 12 is heated and thermally expands and the holding member 48 is cooled and thermally contracts, the bottom portion of the housing of the light source unit 12 elastically deforms so as to become convex upwardly in Fig. 12. The amount by which the front surface of the housing, which has the lens barrel 32 of the light source unit 12, rises up from the holding member 48 is larger than compared with the amount by which the rear surface of the housing, which is at the opposite side of this front surface of the light source unit 12, rises up from the holding member 48. As shown in Fig. 13, it can be understood that the front surface of the light source unit 12 tilts by angle θ in an upwardly-facing direction.

In the state shown in Figs. 12 and 13, the optical axis of the laser beam exiting from the light source unit 12 tilts by the angle θ with respect to the laser beam optical path as designed, the position of the laser beam fluctuates, aberration and eclipse arise due to the alignment of the optical system being thrown off, and the beam quality deteriorates. Therefore, there is the concern that the image quality of an image formed on a photosensitive material will deteriorate.

Thus, in the image recording apparatus of the present invention, by mounting the housing of the light source unit 12 to the holding member 48 via the displacement avoiding portion, relative deformation arising at the time when the housing of the light source unit 12 is heated and thermally expands and the holding member 48 is cooled and thermally contracts is avoided, and it is possible to prevent stress from working on the housing of the light source unit 12. Therefore, the housing of the light source unit 12 deforming, and the mounted posture of the light source unit 12 tilting, can be prevented.

In the structure of the displacement avoiding portion shown in Figs. 2 through 5, the insert-through hole 38 for fixing of the pedestal portion 34 at the housing of the light source unit 12 is fixed by the screw part 46 so as to maintain a predetermined heightwise position on the thermally insulating member 58.

Therefore, in this structure of the displacement avoiding portion, if, due to thermal expansion or thermal contraction, the distance between the screw hole 50 and the screw hole 52 of the holding member 48, and the distance between the insert-through hole 38 for fixing and the play-insertion hole 40 for insertion with play at the housing of the light source unit 12, become different, it is possible to prevent stress, which is in the direction of extending or contracting the interval between the insert-through hole 38 for fixing and the play-insertion hole 40 for insertion with play, from working on the housing main body of the light source unit 12, due to the screw part 46 moving within the play-insertion hole 40 at the housing of the light source unit 12. Note that this operation of the screw part 46 moving within the play-insertion hole 40 is carried out smoothly due to the screw part 46 sliding smoothly between the spacer 62 for thermal insulation and the slide plate 64 due to the working of the grease for lubrication.

When this operation is carried out, the light source unit 12 is guided so as to move along a line which connects the screw hole 50 and the screw hole 52, by the positioning pin 54 which serves as a guide portion and which abuts the front end surface of the housing of the light source unit 12. Therefore, even if the optical axis of the laser beam exiting from the light source unit 12 moves parallel to the laser beam optical path as designed, it does not tilt.

Here, the light source unit 12 makes the laser light, which is emitted by the semiconductor laser 28, into a laser beam of parallel light by the collimator lens 30, and emits the laser beam. Therefore, even if this emitted laser beam which is parallel light moves parallel on a predetermined optical path, the position at the time when the laser beam travels the optical path leading to the photosensitive drum 24 and is imaged on the photosensitive drum 24, does not fluctuate. Therefore, a predetermined optical performance can be maintained. In this way, a high-quality image can be formed.

Next, explanation will be given of another structural example of a displacement avoiding portion provided between the holding member 48 and the housing of the light source unit 12 in the image recording apparatus 10.

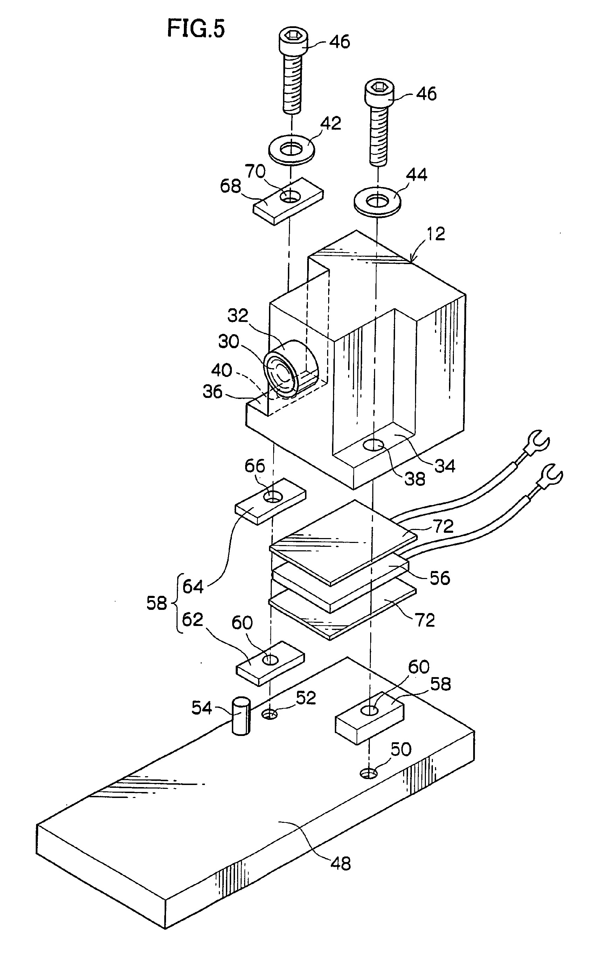

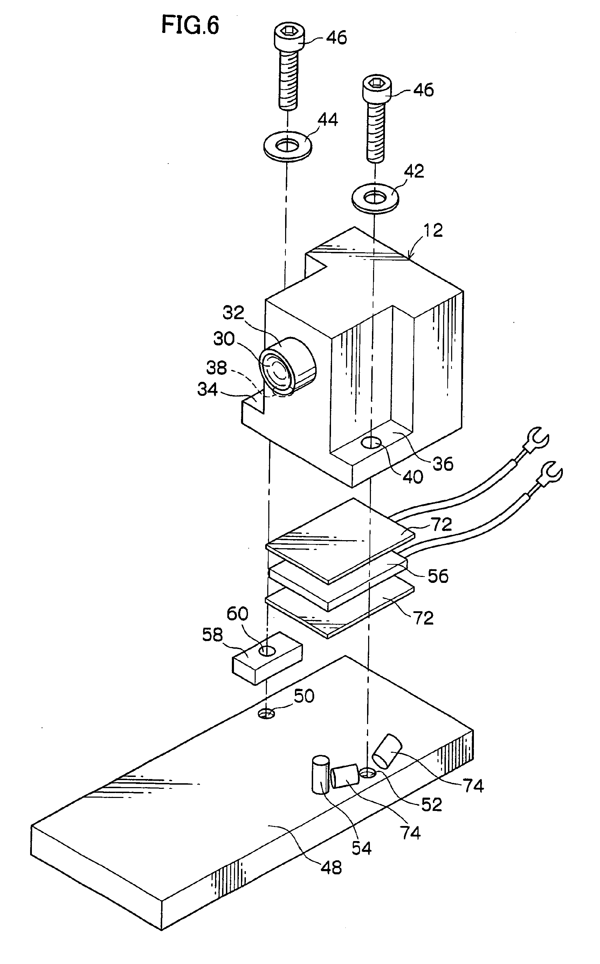

In the structural example of the displacement avoiding portion shown in Fig. 6, the fastened portions by the screw parts 46, which fix the housing of the light source unit 12 to the holding member 48, are structured such that the left and right are opposite to those of the structure shown in Fig. 5, such that the pedestal portion 34 at which the insert-through hole 38 for fixing is provided is disposed at the left side in Fig. 6 of the housing of the light source unit 12, the screw hole 50 is disposed at the left side in Fig. 6 of the holding member 48, the positioning pin 54 serving as the guide portion is disposed at a predetermined position near the right-side screw hole 52 in Fig. 6, and the thermally insulating member 58 is interposed between the insert-through hole 38 for fixing and the screw hole 50.

Further, in the structural example of the displacement avoiding portion shown in Fig. 6, in order to maintain a predetermined interval between the top surface of the holding member 48 and the bottom surface portion of the pedestal portion 36 at which the play-insertion hole 40 is provided at the housing of the light source unit 12, and in order to support the light source unit 12 such that the light source unit 12 is able to move a slight distance, roller members 74 which are roller bearings are disposed at both sides of the screw hole 52 and the play-insertion hole 40, instead of the structure of the spacer 62 for thermal insulation and the slide plate 64.

The roller members 74 which are roller bearings are solid-cylindrical members which are precisely machined to predetermined diameters, and are disposed so as to be able to roll along directions of lines which are radial with respect to a central line of the screw hole 50 and the insert-through hole 38. Namely, the central line of rotation of each of the roller members 74 is disposed in a direction orthogonal to radial lines whose center is the screw hole 50 and the insert-through hole 38.

In the structural example of the displacement avoiding portion which is shown in Fig. 6 and is structured in this way, when, due to thermal expansion or thermal contraction, the distance between the screw hole 50 and the screw hole 52 of the holding member 48, and the distance between the insert-through hole 38 for fixing and the play-insertion hole 40 for insertion with play at the housing of the light source unit 12, become different, due to the roller members 74 rolling without resistance along the expanding or contracting direction of the housing of the light source unit 12 between the bottom surface of the housing of the light source unit 12 and the top surface of the holding member 48, the screw part 46 is moved within the play-insertion hole 40 of the housing of the light source unit 12. Stress in the direction of extending or contracting the interval between the insert-through hole 38 for fixing and the play-insertion hole 40 for insertion with play, is prevented from working on the main body of the light source unit 12.

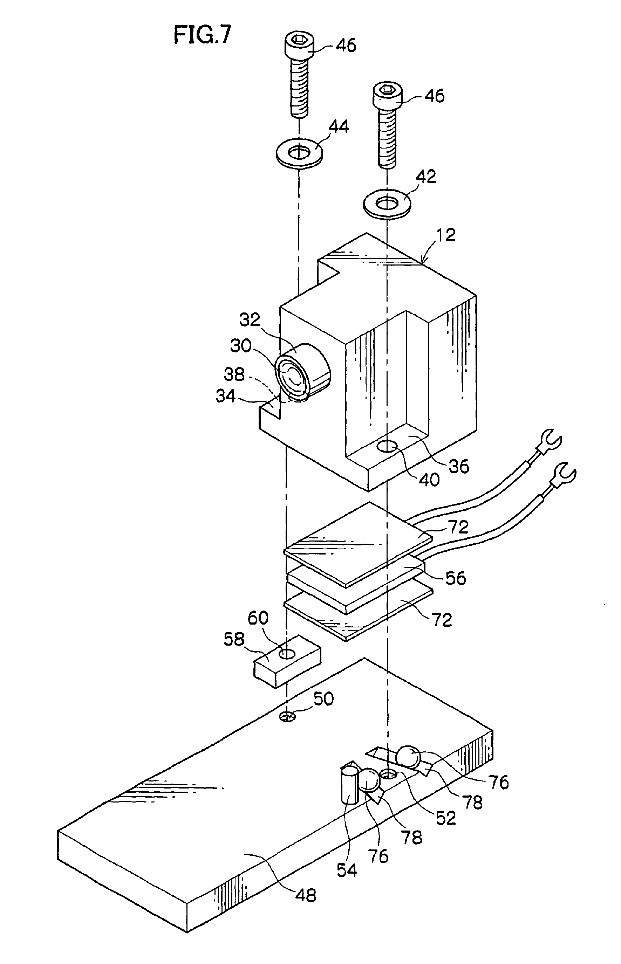

Next, explanation will be given of a structural example shown in Fig. 7 of a displacement avoiding portion provided between the holding member 48 and the housing of the light source unit 12 in the image recording apparatus 10.

In the structural example of the displacement avoiding portion shown in Fig. 7, the fastened portions by the screw parts 46, which fix the housing of the light source unit 12 to the holding member 48, are structured such that the left and right are opposite to those of the structure shown in Fig. 5. Further, in order to maintain a predetermined interval between the top surface of the holding member 48 and the bottom surface portion of the pedestal portion 36 at which the play-insertion hole 40 is provided at the housing of the light source unit 12, and in order to support the light source unit 12 such that the light source unit 12 is able to move a slight distance, ball bearings 76 are disposed at the both sides of the screw hole 52 and the play-insertion hole 40, instead of the structure of the spacer 62 for thermal insulation and the slide plate 64. These ball bearings 76 are formed in the shapes of spheres which are precisely machined to predetermined diameters.

V-shaped grooves 78, which extend in directions of lines which are radial with respect to a central line of the screw hole 50 and the insert-through hole 38, are formed at both sides of the screw hole 52 of the holding member 48. The ball bearings 76, which can roll along the directions of radial lines whose center is the screw hole 50 and the insert-through 38, are disposed within the V-shaped grooves 78. Note that the ball bearings 76 may be disposed so as to roll within a plane of a predetermined range.

In the structural example of the displacement avoiding portion which is shown in Fig. 7 and is structured in this way, when, due to thermal expansion or thermal contraction, the distance between the screw hole 50 and the screw hole 52 of the holding member 48, and the distance between the insert-through hole 38 for fixing and the play-insertion hole 40 for insertion with play at the housing of the light source unit 12, become different, due to the ball bearings 76 rolling without resistance along the expanding or contracting direction of the housing of the light source unit 12 between the bottom surface of the housing of the light source unit 12 and the top surface of the holding member 48, the screw part 46 is moved within the play-insertion hole 40 of the housing of the light source unit 12. Stress in the direction of extending or contracting the interval between the insert-through hole 38 for fixing and the play-insertion hole 40, is prevented from working on the main body of the light source unit 12.

Note that, in the structural example of the displacement avoiding portion shown in Fig. 7, the V-shaped grooves 78 are provided at the holding member 48. However, a structure may be employed in which the ball bearings 76 are disposed directly on the surface of the holding member 48.

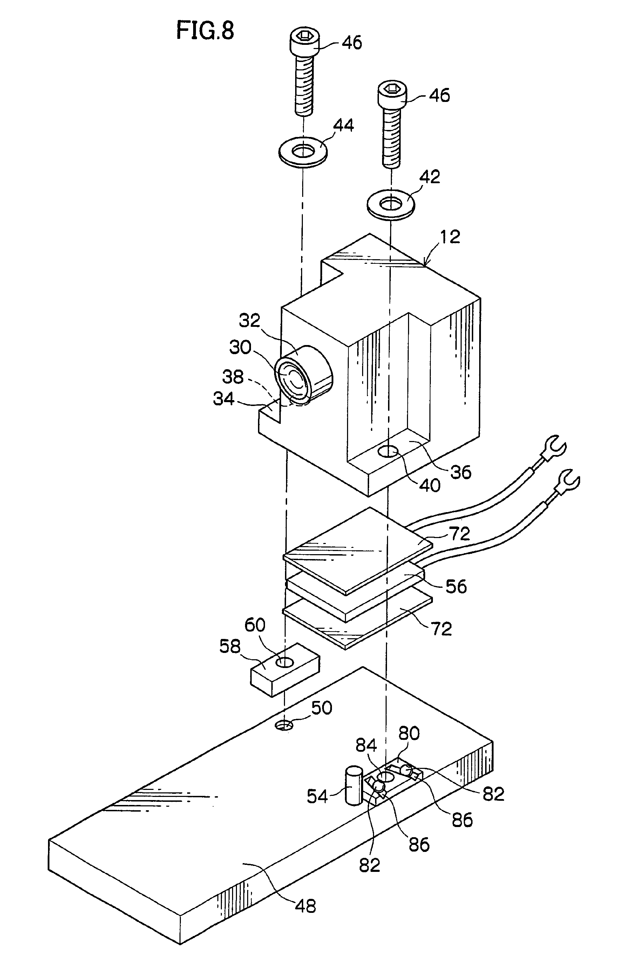

Next, explanation will be given of a structural example shown in Fig. 8 of a displacement avoiding portion provided between the holding member 48 and the housing of the light source unit 12 in the image recording apparatus 10.

In the structural example of the displacement avoiding portion shown in Fig. 8, the fastened portions by the screw parts 46, which fix the housing of the light source unit 12 to the holding member 48, are structured such that the left and right are opposite to those of the structure shown in Fig. 5. Further, in the structural example of the displacement avoiding portion shown in Fig. 8, in order to maintain a predetermined interval between the top surface of the holding member 48 and the bottom surface portion of the pedestal portion 36 at which the play-insertion hole 40 is provided at the housing of the light source unit 12, and in order to support the light source unit 12 such that the light source unit 12 is able to move a slight distance, instead of the structure of the spacer 62 for thermal insulation and the slide plate 64, a pedestal member 80 is disposed at the screw hole 52 portion, and small ball bearings 82 are disposed between this pedestal member 80 and the bottom surface of the housing of the light source unit 12.

A screw hole 84, which is a through hole which communicates with the screw hole 52, is formed in the pedestal member 80. The small ball bearings 82 are disposed at the both sides of the screw hole 84 and the play-insertion hole 40. These small ball bearings 82 are formed in the shapes of spheres which are precisely machined to predetermined small diameters.

Generally, the small ball bearings 82 shown in Fig. 8 can be manufactured more cheaply than the relatively large ball bearings 76 shown in Fig. 7 can be manufactured. Accordingly, the manufacturing cost of the displacement avoiding portion shown in Fig. 8 is relatively low.

V-shaped grooves 86, which extend in radial line directions with respect to a central line of the screw hole 50 and the insert-through hole 38, are formed at both sides of the screw hole 84 of the pedestal member 80. The small ball bearings 82, which can roll along the directions of radial lines whose center is the screw hole 50 and the insert-through hole 38, are disposed within the V-shaped grooves 86.

In the structural example of the displacement avoiding portion which is shown in Fig. 8 and is structured in this way, when, due to thermal expansion or thermal contraction, the distance between the screw hole 50 and the screw hole 52 of the holding member 48, and the distance between the insert-through hole 38 for fixing and the play-insertion hole 40 for insertion with play at the housing of the light source unit 12, become different, due to the small ball bearings 82 rolling without resistance along the expanding or contracting direction of the housing of the light source unit 12 between the bottom surface of the housing of the light source unit 12 and the V-shaped grooves 86 of the pedestal member 80, the screw part 46 is moved within the play-insertion hole 40 of the housing of the light source unit 12. Stress in the direction of extending or contracting the interval between the insert-through hole 38 for fixing and the play-insertion hole 40 for insertion with play, is prevented from working on the main body of the light source unit 12.

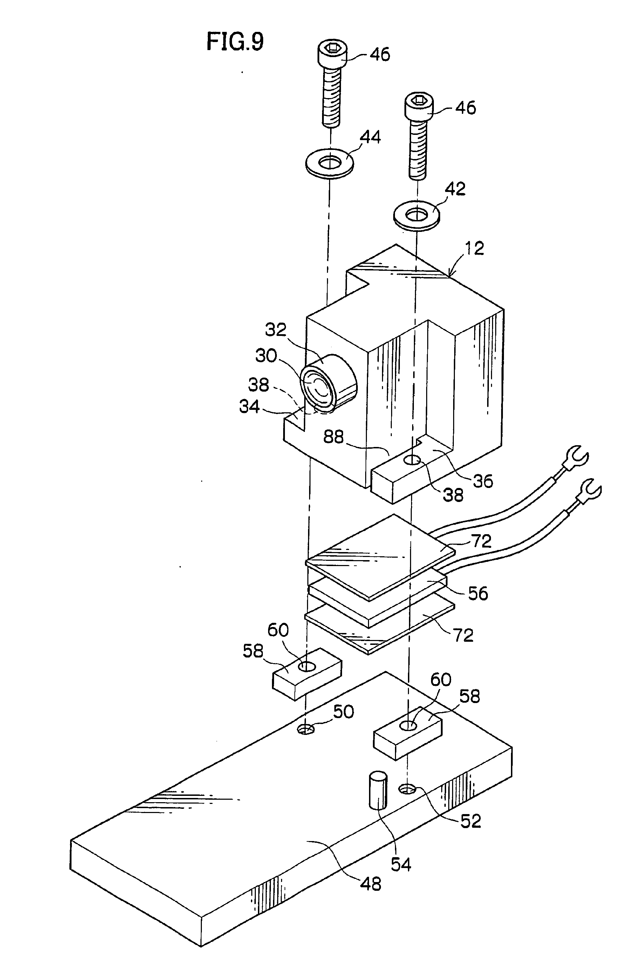

Next, explanation will be given of a structural example shown in Fig. 9 of a displacement avoiding portion provided between the holding member 48 and the housing of the light source unit 12 in the image recording apparatus 10.

In the structural example of the displacement avoiding portion shown in Fig. 9, the insert-through hole 38 for fixing is formed in both the pedestal portion 34 and the pedestal portion 36 of the housing of the light source unit 12. The thermally insulating members 58, which serve as spacers which keep the interval between the holding member 48 and the housing of the light source unit 12 constant, are disposed in correspondence with the screw hole 50 and the screw hole 52 of the holding member 48.

Further, in this structural example of the displacement avoiding portion shown in Fig. 9, in order to structure the pedestal portion 36 which is at the right side in Fig. 9 to project-out in the shape of a cantilevered beam with respect to the housing main body of the light source unit 12, a groove 88 is formed which is an opening which separates the pedestal portion 36 and one side surface which is bent from and connected to the front surface of the housing of the light source unit 12 at which the lens barrel 32 is provided. Note that the groove 88 may be structured by an opening of a needed configuration which is formed so as to elastically deform the portion of the pedestal portion 36 where the insert-through hole 38 for fixing is provided, such that the interval between the two insert-through holes 38 for fixing can be changed.

In the structural example of the displacement avoiding portion shown in Fig. 9, the positioning pin 54, which serves as a guide portion and which stands erect at the holding member 48, is disposed so as to correspond to a position abutting a region near the groove 88 at the housing of the light source unit 12.

In the structural example of the displacement avoiding portion shown in Fig. 9, the light source unit 12 is fastened on the holding member 48 due to the respective screw parts 46 being inserted through the insert-through holes 38 for fixing corresponding respectively to the pedestal portions 34, 36 at the housing of the light source unit 12, and through the insert-through holes 60 of the thermally insulating members 58, and being screwed-into the screw hole 50 and the screw hole 52.

In the structural example of the displacement avoiding portion which is shown in Fig. 9 and is structured in this way, when, due to thermal expansion or thermal contraction, the distance between the screw hole 50 and the screw hole 52 of the holding member 48, and the distance between the insert-through hole 38 for fixing of the pedestal portion 34 and the insert-through hole 38 for fixing of the pedestal portion 36 at the housing of the light source unit 12, become different, the force, which is in the direction of extending or contracting the interval between the insert-through holes 38 for fixing corresponding respectively to the pedestal portions 34, 36, is reduced and deformation is kept small due to the one pedestal portion 36, which is separated by the groove 88, being a cantilevered beam and being elastically deformed by relatively weak stress.

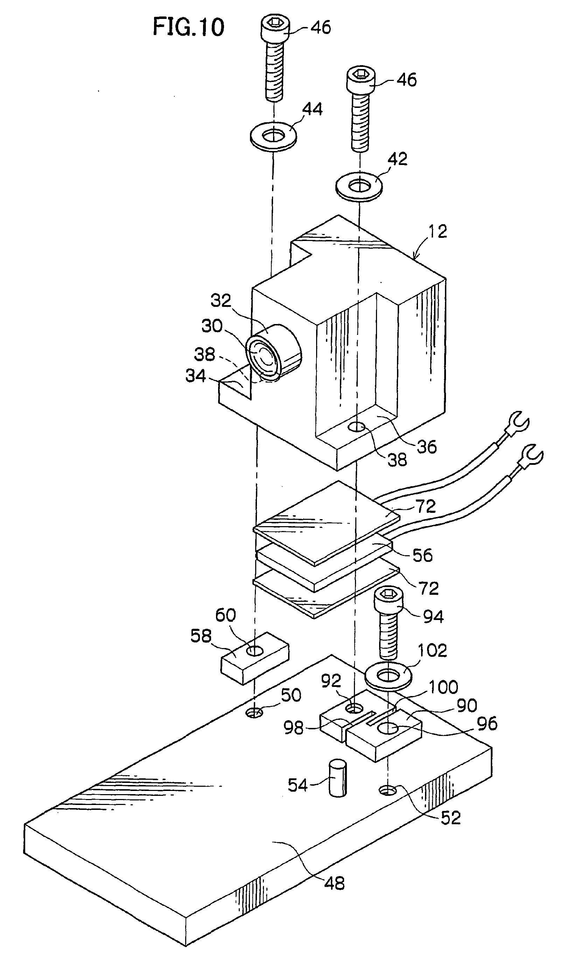

Next, explanation will be given of a structural example shown in Fig. 10 of a displacement avoiding portion provided between the holding member 48 and the housing of the light source unit 12 in the image recording apparatus 10.

In the structural example of the displacement avoiding portion shown in Fig. 10, the insert-through hole 38 for fixing is formed in both the pedestal portion 34 and the pedestal portion 36 of the housing of the light source unit 12. The thermally insulating member 58, which serves as a spacer which keeps the interval between the holding member 48 and the housing of the light source unit 12 constant, is disposed in correspondence with the one screw hole 50 of the holding member 48. A thermally insulating, elastically deforming member 90, which both functions as a spacer which keeps the interval between the holding member 48 and the housing of the light source unit 12 constant and functions to prevent stress from working on the light source unit 12, is disposed in correspondence with the other screw hole 52 formed in the holding member 48.

The thermally insulating, elastically deforming member 90 is formed as a relatively large parallelepiped having a predetermined thickness. A screw hole 92 which fastens the screw part 46, and an insert-through hole 96 through which a screw part 94 is inserted, are formed in a line at the thermally insulating, elastically deforming member 90.

A thin groove 98, which opens so as to pass between the screw hole 92 and the insert-through hole 96 from one end portion and extend to near the other end portion, and a thin groove 100, which opens so as to pass between the screw hole 92 and the insert-through hole 96 from the other end portion and extend to near the one end portion, are formed between the screw hole 92 and the insert-through hole 96 of the thermally insulating, elastically deforming member 90. Note that the thin groove 98 and the thin groove 100 may be structured by openings of needed configurations which are formed so as to changeably elastically deform the interval between the screw hole 92 and the insert-through hole 96.

In the structural example of the displacement avoiding portion shown in Fig. 10, the positioning pin 54, which serves as a guide portion and which stands erect at the holding member 48, is disposed so as to correspond to a position abutting the housing of the light source unit 12 near the pedestal portion 36 which is fastened via the thermally insulating, elastically deforming member 90.

In the structural example of the displacement avoiding portion shown in Fig. 10, the one screw part 46 is passed through the washer 44, is inserted through the insert-through hole 38 for fixing of the pedestal portion 34 of the housing of the light source unit 12 and through the insert-through hole 60 of the thermally insulating member 58, and is screwed-into and fastened to the screw hole 50. The other screw part 46 is passed through the washer 42, is inserted through the insert-through hole 38 for fixing of the pedestal portion 36, and is screwed-into and fastened to the screw hole 92 of the thermally insulating, elastically deforming member 90. Further, the screw part 94 is passed through a washer 102, inserted through the insert-through hole 96 of the thermally insulating, elastically deforming member 90, and screwed-into and fastened to the screw hole 52.

In the structural example of the displacement avoiding portion which is shown in Fig. 10 and structured in this way, when the region between the screw hole 50 and the screw hole 52 of the holding member 48, and the region between the insert-through hole 38 for fixing of the pedestal portion 34 and the insert-through hole 38 for fixing of the pedestal portion 36 at the housing of the light source unit 12, thermally expand or thermally contract, the interval between the screw hole 92 and the insert-through hole 96 contracts or expands due to the portions of the thin groove 98 and the thin groove 100 of the thermally insulating, elastically deforming member 90 respectively elastically deforming due to relatively weak stress. In this way, the force, which is in the direction of extending or contracting the interval between the insert-through hole 38 for fixing of the pedestal portion 34 and the insert-through hole 38 for fixing of the pedestal portion 36, is reduced, and deformation is kept small.

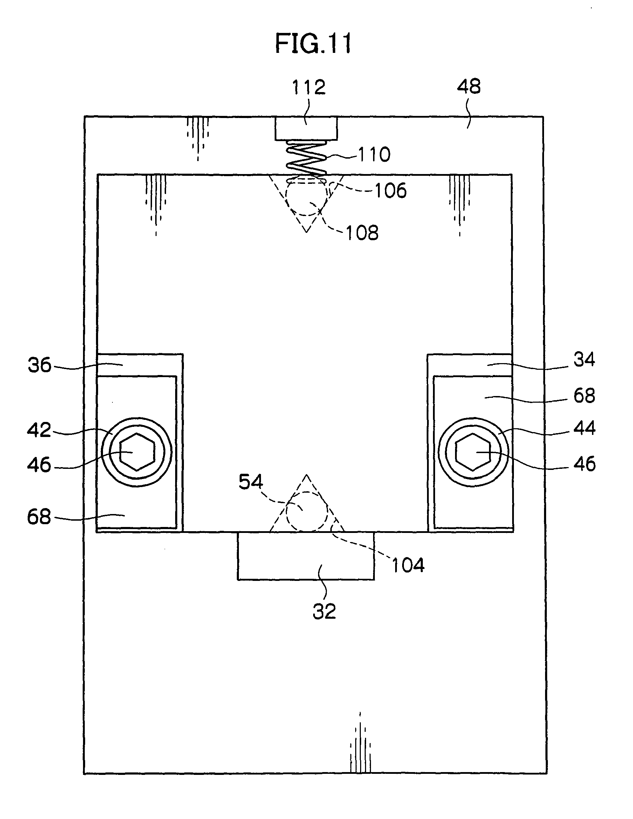

Next, explanation will be given of a structural example shown in Fig. 11 of a displacement avoiding portion provided between the holding member 48 and the housing of the light source unit 12 in the image recording apparatus 10.

In the structural example of the displacement avoiding portion shown in Fig. 11, play-insertion holes 40 for insertion with play are formed in both the pedestal portion 34 and the pedestal portion 36 at the housing of the light source unit 12. Further, in the same way as in above-described Fig. 5, the thermally insulating members 58, which are disposed so as to correspond respectively to the screw hole 50 and the screw hole 52 of the holding member 48, are structured by combining the spacers 62 for thermal insulation and the slide plates 64 with lubricant interposed therebetween. Moreover, the auxiliary slide plates 68 are disposed respectively on the pedestal portion 34 and the pedestal portion 36 in which the play-insertion holes 40 of the housing of the light source unit 12 are provided. The metal or plastic washers 42, 44 are disposed on the auxiliary slide plates 68.

In the structural example of the displacement avoiding portion shown in Fig. 11, in the same way as in above-described Fig. 5, the one screw part 46 is passed through the washer 42, the insert-through hole 70 of the auxiliary slide plate 68, the play-insertion hole 40 of the pedestal portion 36, the insert-through hole 66 of the slide plate 64, and the insert-through hole 60 of the spacer 62 for thermal insulation, and is screwed-into and fastened to the screw hole 52 of the holding member 48. The other screw part 46 is passed through the washer 44, the insert-through hole 70 of the auxiliary slide plate 68, the play-insertion hole 40 of the pedestal portion 34, the insert-through hole 66 of the slide plate 64 (not shown in Fig. 11, but the same structure as the slide plate 64 shown in Fig. 5), and the insert-through hole 60 of the spacer 62 for thermal insulation (not shown in Fig. 11, but the same structure as the spacer 62 for thermal insulation shown in Fig. 5), and is screwed-into and fastened to the screw hole 50 of the holding member 48.

Further, in the structural example of the displacement avoiding portion shown in Fig. 11, a V-shaped positioning groove 104 is formed, so as to open so as to widen toward the front surface of the light source unit 12, at a position directly beneath the lens barrel 32 at the bottom surface portion of the housing of the light source unit 12. A V-shaped positioning groove 106 is formed, so as to open so as to widen toward the rear surface, at the rear surface portion of the light source unit 12 at a position corresponding to the positioning groove 104.

In the structural example of the displacement avoiding portion shown in Fig. 11, the positioning pin 54, which is solid-cylindrical and serves as a guide portion, stands erect. The positioning pin 54 carries out positioning such that the central axis thereof is positioned on the optical path of the laser beam on the holding member 48.

In addition, a positioning member 108, which is solid-cylindrical, is disposed at a position which corresponds to on the optical path of the laser beam on the holding member 48 and which is separated from the positioning pin 54 by a distance corresponding to the optical path direction length of the light source unit 12. The positioning member 108 is, by a compression coil spring 110 which is stretched between the positioning member 108 and a supporting member 112 which projects-out at the holding member 48, guided so as to go along the optical path of the laser beam and urged to move toward the positioning pin 54.

In the structural example of the displacement avoiding portion shown in Fig. 11, when the housing of the light source unit 12 is to be assembled to the holding member 48, the positioning pin 54 serving as a guide portion is inserted into the positioning groove 104, the positioning member 108 is inserted into the positioning groove 106, and the positioning member 108 is urged by the urging force of the compression coil spring 110 to move in the positioning groove 106 in the optical axis direction. The light source unit 12 is thereby positioned in a state in which the optical axis direction of the laser beam and a predetermined optical path of the laser beam as designed, coincide with one another. Note that the heightwise position of the light source unit 12 is positioned by the thermally insulating members 58 which combine the spacers 62 for thermal insulation and the slide plates 64.

In the structural example of the displacement avoiding portion which is shown in Fig. 11 and is structured in this way, even in cases in which the holding member 48 and the light source unit 12 respectively thermally expand or thermally contract, they are held by the positioning pin 54 serving as the guide portion and the positioning groove 104, and by the positioning member 108 and the positioning groove 106, such that the optical axis of the laser beam exiting from the light source unit 12 and the set optical path of the laser beam match.

In addition, if the holding member 48 and the light source unit 12 become respectively different temperatures and thermally expand or thermally contract, stress, which causes the light source unit 12 main body to expand or contract or to tilt, is prevented from working from the holding member 48 side, due to the respective screw parts 46 being moved within the play-insertion hole 40 of the pedestal portion 34 and the play-insertion hole 40 of the pedestal portion 36 at the housing of the light source unit 12. Note that this operation of the screw parts 46 moving within the play-insertion holes 40 is carried out smoothly due to the screw parts 46 sliding smoothly between the spacers 62 for thermal insulation and the slide plates 64 due to the working of the grease for lubrication.

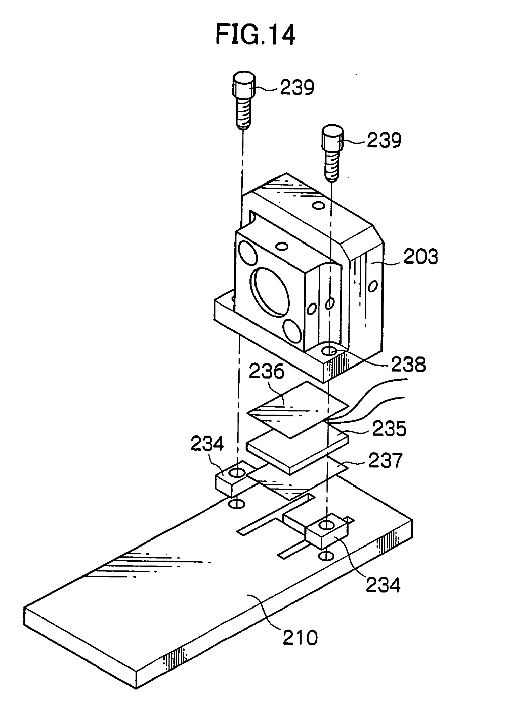

A second embodiment of the present invention will be described next with reference to Figs. 14 through 17.

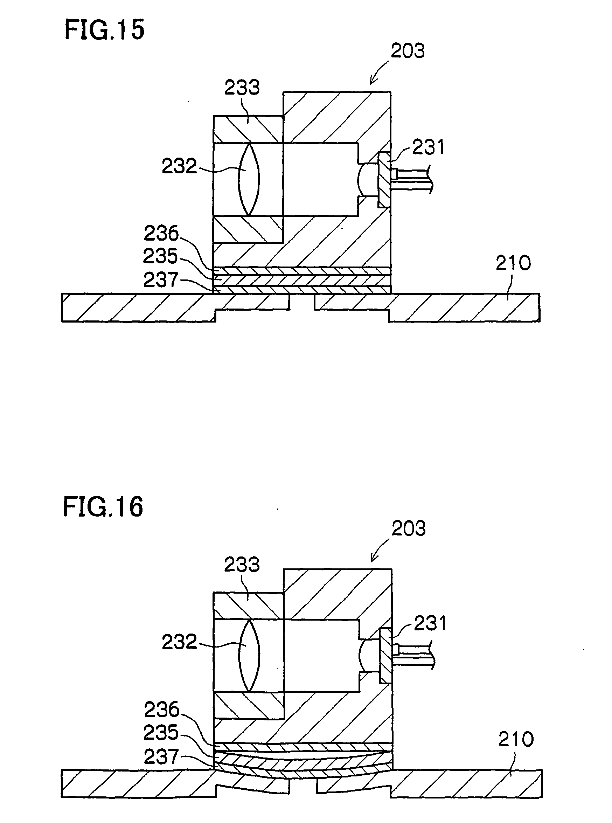

As shown in Figs. 14 and 15, in a light source unit 203, a semiconductor laser 231 which emits a light beam, and a collimator lens 232 which converts the light beam into parallel light, are made integral, and the light source unit 203 is structured such that the optical axes of the semiconductor laser 231 and the collimator lens 232 coincide with one another.

The semiconductor laser 231 which is the light source is provided at one end side (the right end side in Fig. 15) of the light source unit 203. A lens barrel 233 which has, at the interior thereof, the collimator lens 232 which converts the light beam emitted from the semiconductor laser 231 into parallel light, is provided at the other end side (the left end side in Fig. 15).

The collimator lens 232 and the semiconductor laser 231 are disposed near to one another at a predetermined interval. In this way, the laser light emitted from the semiconductor laser 231 can be efficiently collected, and compactness of the members and a reduction in the number of members can be aimed for.

As shown in Fig. 14, the light source unit 203 has holding holes 238 for fixing. The light source unit 203 is fixed to a base member 210, which is a case, by screws 239 via the holding holes 238. Hereinafter, the portion, which is a portion of the case and at which the light source unit 203 is disposed, will be called the base member (holding member) 210.

Spacers 234 are provided between the base member 210 and the holding holes 238 of the light source unit 203, and keep the interval between the light source unit 203 and the base member 210 constant. The spacers 234 are formed of a material having low heat conductivity such as ceramic or the like, and prevent the heat which is generated at the light source unit 203 from being conducted to the base member 210.

A Peltier element 235 serving as a temperature control portion is disposed between the base member 210 and the holding holes 238 of the light source unit 203. The Peltier element 235 is a heat exchange element which, due to current flowing thereto, can make one surface be a low temperature and the other surface be a high temperature.

The semiconductor laser 231 of the light source unit 203 generates heat due to driving current during exposure. Thus, the temperature of the light source unit 203 can be kept constant due to the Peltier element 235 absorbing the heat generated at the light source unit 203.

Slits, which are formed in the shape of the letter H and structure the displacement avoiding portion, are formed at the portion where the Peltier element 235 is disposed, i.e., at the base member 210. There are three of the slits, and two thereamong are provided parallel to one another at a width which is wider than the opposing sides of the rectangular Peltier element 235 which run along the direction in which the laser light exits. The remaining one slit is provided so as to connect the central portions of the two slits which are provided in parallel. Further, the thickness of the base member 210 is thinner than that of the other portions of the case.

The portions of the base member 210 which are surrounded by the three slits are structures which easily deform with respect to stress from above the base member 210.

These slits can be formed by applying wire cut electric discharge machining. Wire cut electric discharge machining uses an electrode wire of an electric discharge machine, and is an electric discharge machining method which causes a discharging phenomenon to occur while relatively moving a slender wire electrode which is stretched perpendicularly by an NC apparatus through a metal object of machining and, and carries out cutting machining in a needed shape such as a fret sawing machine.

Fig. 15 schematically shows a state before current is made to flow to the Peltier element, i.e., before heat exchange is carried out. In contrast, Fig. 16 schematically shows a state at the time when current is made to flow to the Peltier element, i.e., at the time when heat exchange is carried out.

As shown in Fig. 16, strain is generated at the time when the Peltier element 235 radiates the heat, which is generated at the light source unit 203, at the surface at the opposite side of the light source unit 203. The Peltier element 235 deforms so as to warp due to the change in its own temperature. However, the slits are provided in the base member 210 where the Peltier element 235 is disposed, and the base member 210 is structured such that the thickness thereof is thin. Therefore, in accordance with the deformation of the Peltier element 235, the base member 210 also elastically deforms, and the positional relationship of the light source unit 203 is maintained.

Accordingly, when such a structure is employed, the positional relationship of the light source unit 203 is kept constant, the optical path of the light beam exiting from the light source unit 203 is stabilized, and an image of high image quality can be formed.

Note that, when the positional relationship of the light source unit 203 becomes offset, up until the light beam reaches the photosensitive drum 24, this offset increases, and there is the concern that the image formed on the photosensitive drum 24 will deteriorate. In contrast, in cases in which there is no offset in the positional relationship of the light source unit 203, even if some offset arises in the positional relationship of the optical members up until the light beam reaches the photosensitive drum 24, the desired optical performance can be maintained. Therefore, maintaining the positional relationship of the light source unit 203 constant is important for ensuring the optical performance.

Heat radiating sheets 236, 237, which are formed of a material having high thermal conductivity, are disposed between the light source unit 203 and the Peltier element 235, and between the Peltier element 235 and the base member 210. Generally, if surfaces which contact one another are hard, the surfaces of contact contact one another at points when viewed microscopically, and an air layer which has a thermally insulating effect exists between the surfaces of contact. Thus, by filling-in the gaps of the air layers by the heat radiating sheets 236, 237, the efficiency of conductive heat transfer can be increased.

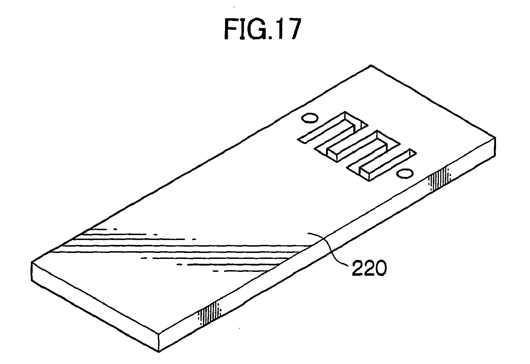

Another example of the configuration of the slits of the base member will be described with reference to Fig. 17.

Fig. 17 shows another example of the configuration of the slits of the base member. In the embodiment shown in Fig. 14, the slits of the base member 210 are formed in the shape of the letter H, but the slits of the present invention are not limited to the same.

As shown in Fig. 17, slits are provided in the base member at which the light source unit 203 is disposed, in a configuration which continuously combines shapes of the letter U. Namely, the portions of a base member 220 which are surrounded by the slits are shaped as the teeth of a comb which project-out alternately, and are structured so as to deform easily with respect to stress from above the base member 220.

When such a structure is employed, the base member 220 elastically deforms in accordance with the deformation of the Peltier element 235, the positional relationship of the light source unit 203 is maintained, the optical path of the light beam exiting from the light source unit 203 is stabilized, and an image of high image quality can be formed.

Further, in the embodiment shown in Figs. 14 through 16, the light source unit 203 is structured such that the semiconductor laser 231 which emits a light beam, and the collimator lens 232 which makes the light beam parallel, are integral. However, it suffices for the light source unit of the present invention to include only the semiconductor laser, and the collimator lens may be structured separately.

In the present invention, the heat of the light source unit which is a source of heat generation is absorbed at the Peltier element. Therefore, it suffices for the light source unit to include a semiconductor laser. Even if the semiconductor laser is not structured integrally with a collimator lens, a rise in the temperature of the light source unit is suppressed, the positional relationship of the light source unit is maintained, and an image of high image quality can be formed on a photosensitive material.

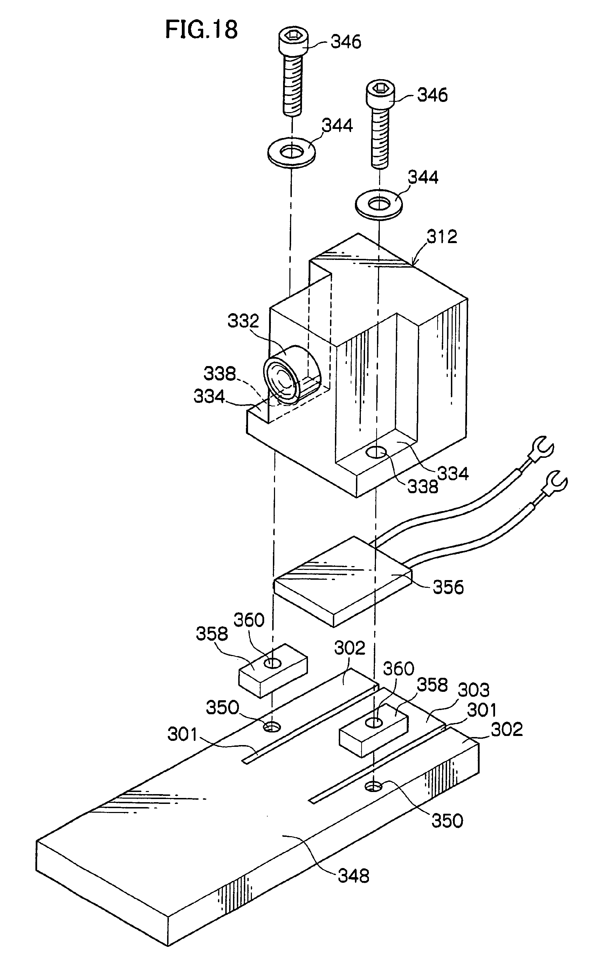

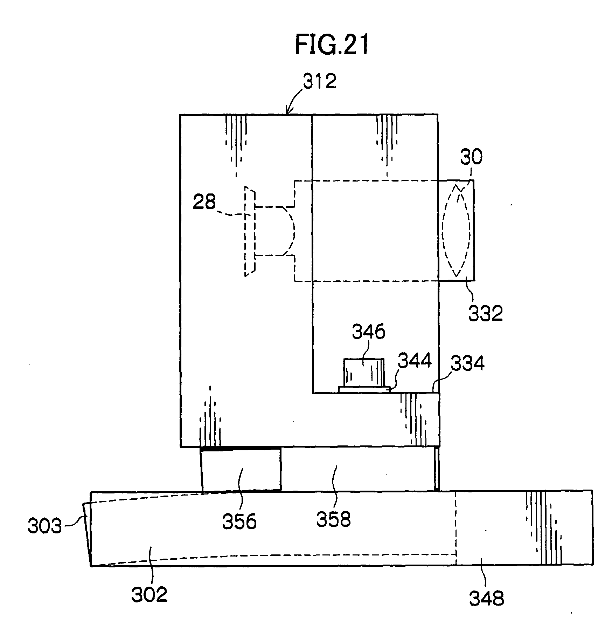

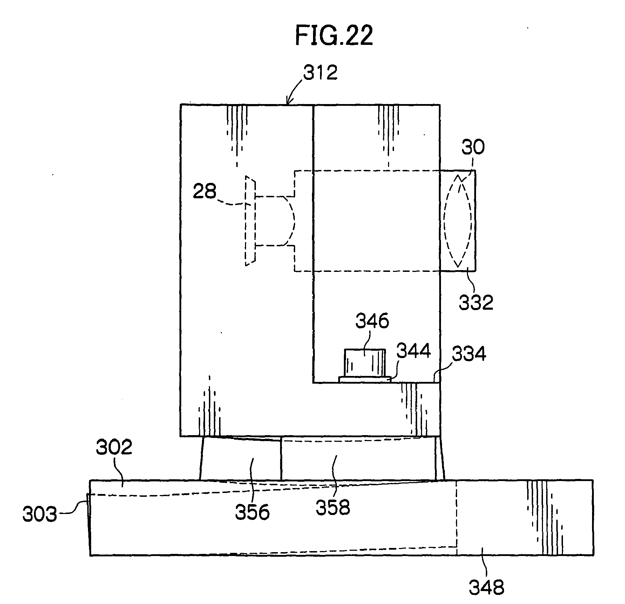

Next, a third embodiment of the present invention will be described with reference to Figs. 18 through 24.

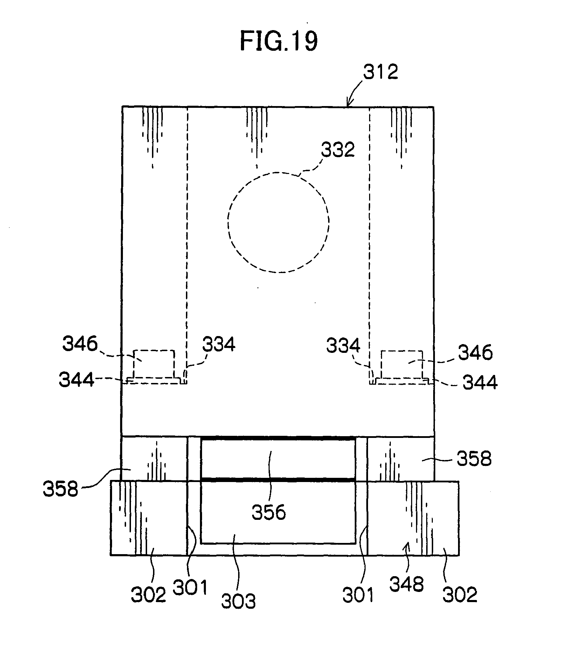

As shown in Figs. 18 and 19, at a substantially parallelepiped housing main body of a light source unit 312, portions at the both sides of a front surface where a lens barrel 332 is provided are cut-out in the shapes of small rectangles, such that two pedestal portions 334 which are formed in the shapes of small, rectangular base plates are provided.

At the housing of the light source unit 312, insert-through holes 338, which are through holes for fastening through which screw parts 346 pass respectively, are formed in the pedestal portions 334.

In order to structure a displacement avoiding portion which suppresses offset of at least the angle of the optical axis of the laser beam exiting from the light source unit 312, screw holes 350, which are for the screwing-in of the screw parts 346, are formed at two predetermined positions on a holding member (platen) 348 at the portion of the holding member 348 to which the housing of the light source unit 312 is fastened.

Further, in order to structure the displacement avoiding portion, two slits 301 for assisting deformation, which are a predetermined length, are formed between the two screw holes 350 so as to be parallel to one another. The slits 301 for assisting deformation are formed as rectilinear slits of the same length which open at one end portion of the holding member 348 and which pass by the positions of the two screw holes 350 and extend toward the other end side of the holding member 348 (thin cut-out grooves which pass-through in the direction of thickness of the holding member 348).

In this way, at the holding member 348, the screw holes 350 are formed at positions which are separated by the same distances from proximal end portions of the slits 301 for assisting deformation of elastically deforming beam pedestal portions 302 which are shaped as cantilevered beams having the same cross-sectional configurations and which are demarcated by the slits 301 for assisting deformation.

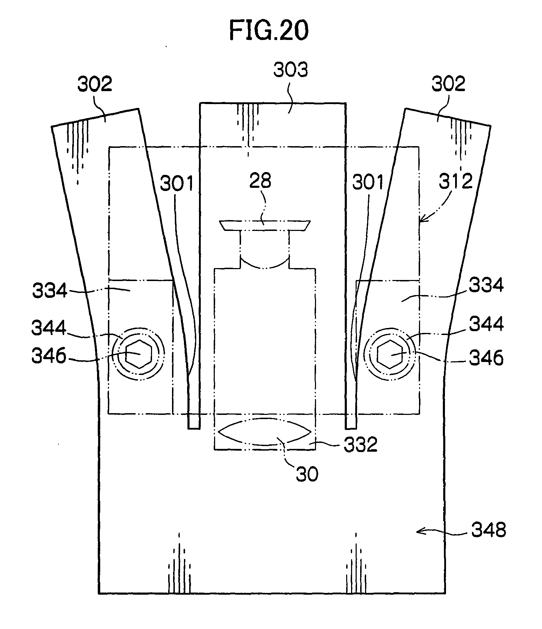

At the holding member 348 which is structured in this way, when forces of the same magnitude are applied between the two screw holes 350 in directions of making them approach or move away from one another, as shown in Fig. 20, the elastically deforming beam pedestal portions 302 elastically deform equally.

Further, as shown in Fig. 19, in order to structure the displacement avoiding portion, the holding member 348 is structured such that the bottom portion (the side opposite the surface which the bottom of the light source unit 312 abuts) of a receiving piece portion 303, which is shaped as a rectangular, cantilevered beam and is sandwiched between the pair of slits 301 for assisting deformation, is formed to be thin-walled due to a predetermined thickness thereof being excised, and in the state in which the holding member 348 is placed on a flat surface, the bottom surface of the receiving piece portion 303 is in a state of floating in the air, and when load is applied to the receiving piece portion 303, the free end portion of the receiving piece portion 303 can elastically deform so as to be lowered.

The light source unit 312 is set on the holding member 348 via the displacement avoiding portion and a temperature control portion. The temperature control portion can be structured by using a Peltier element 356 which is a heat exchange element, and thermally insulating members 358 which suppress thermal conduction. Note that, in the present third embodiment, the temperature control portion is structured by using both the Peltier element 356 and the thermally insulating members 358 at the same time, but it suffices for the temperature control portion to be structured by only the Peltier element 356.

The thermally insulating members 358 are structured as spacers which keep the interval between the holding member 348 and the housing of the light source unit 312 constant. Because the thermally insulating members 358 are formed of a material which has low thermal conductivity such as ceramic or the like, they prevent thermal conduction between the holding member 348 and the housing of the light source unit 312.

Further, the thermally insulating members 358, which are disposed at the insert-through hole 338 portions, are formed as rectangular members having a thickness corresponding to the set interval between the holding member 348 and the housing of the light source unit 312. Insert-through holes 360 for the screw parts 346 are formed in the central portions of the thermally insulating members 358.

As shown in Figs. 18 and 19, because the light source unit 312 is set on the holding member 348 via the thermally insulating members 358, washers 344 which are made of metal or plastic are disposed on the pedestal portions 334 in which the insert-through holes 338 are provided at the housing of the light source unit 312.

When the light source unit 312 is to be mounted on the holding member 348, the respective screw parts 346 are passed through the washers 344, the insert-through holes 338 at the housing of the light source unit 312, and the insert-through holes 360 of the thermally insulating members 358, and are screwed-in and fastened to the screw holes 350 of the holding member 348.

As shown in Figs. 18, 19, 21, and 22, in the image recording apparatus, the Peltier element 356 which serves as the temperature control portion is disposed so as to be sandwiched between the bottom surface of the housing of the light source unit 312 and the surface of the holding member 348.

Further, silicon grease is applied and interposed in the form of a layer of a predetermined thickness between one surface of the Peltier element 356 and the bottom surface of the housing of the light source unit 312, and between the other surface of the Peltier element 356 and the surface of the holding member 348. By making these surfaces of contact fit against one another closely by the silicon grease, air layers which have a thermally insulating effect are prevented from existing therebetween, and the efficiency of the conductive heat transfer can be increased.

Further, by placing the silicon grease thereat, when the Peltier element 356 deforms as a bimetal, the deformation of the Peltier element 356 is absorbed at the portions of the silicon grease layers. Therefore, it is possible to suppress thermal stress working on the light source unit 312 and deforming the housing, and displacement due to thermal stress arising in the state in which the light source unit 312 is mounted, and the housing of the light source unit 312 tilting due to deformation of the Peltier element 356.

In this image recording apparatus, by controlling the current that flows to the Peltier element 356, control which maintains the housing of the light source unit 312 at a constant temperature is carried out. Note that, at this time, the housing of the light source unit 312 is thermally insulated from the holding member 348 by the thermally insulating members 358, and it is possible to prevent heat exchange from arising between the holding member 348 and the housing of the light source unit 312. Therefore, control which keeps the light source unit 312 at a constant temperature can be carried out efficiently.

Firstly, the slits 301 for assisting deformation, which structure the displacement avoiding portion, are formed so as to be substantially perpendicular to a straight line joining the centers of the two screw holes 350 formed in the holding member 348.

With such a structure, even if a state arises in which, at the time of temperature adjustment at the Peltier element 356, a temperature difference arises between the light source unit 312 and the holding member 348 and the amounts of thermal deformation differ, the respective elastically deforming beam pedestal portions 302 which are the same shape elastically deform symmetrically and by uniform amounts. Therefore, it is possible to suppress the light source unit 312 deforming and the optical axis of the laser beam moving so as to become offset from a predetermined position.

Secondly, the pair of slits 301 for assisting deformation which structure the displacement avoiding portion, together with the light source unit 312 and the holding member 348, are structured in symmetric shapes with respect to a plane which includes the optical axis of the laser beam exiting from the lens barrel 332 of the light source unit 312, and which is perpendicular to a holding surface which is the surface of the holding member 348 which holds the light source unit 312.

Due to such a structure, the deformation due to the heat of the light source unit 312 itself, and the deformation due to the heat of the holding member 348 itself, are generated symmetrically with respect to the laser beam exiting from the light source unit 312, and cancel one another out. Therefore, it is possible to suppress occurrence of offset of the optical axis of the laser beam (here, offset of the angle of the optical axis of the laser beam exiting from the light source unit 312, and positional offset which is such that the optical axis moves substantially parallel).

Thirdly, the slits 301 for assisting deformation are structured such that the elastically deforming beam pedestal portions 302 for supporting and fixing the light source unit 312 at the holding member 348, and the receiving piece portion 303 which is the portion which the Peltier element 356 abuts, are separated, and even if the receiving piece portion 303 elastically deforms due to the bimetal-like deformation of the Peltier element 356, the stress from this elastic deformation is not applied to the elastically deforming beam pedestal portions 302.

Namely, in the structure of this displacement avoiding portion, even if the Peltier element 356 deforms as a bimetal for the temperature adjusting operation, the receiving piece portion 303, which is elastically deformed by the deformed Peltier element 356, is separated from the respective elastically deforming beam pedestal portions 302 by the respective slits 301 for assisting deformation. Therefore, it is possible for the deformation of the Peltier element 356 to not affect the fixed state of the light source unit 312 by the respective elastically deforming beam pedestal portions 302.

Accordingly, in this image recording apparatus, by providing the displacement avoiding portion in accordance with thermal stress between the light source unit 312 and the holding member 348, effects, which are due to relative deformation arising at the time when a state arises in which the housing of the light source unit 312 is heated and thermally expands and the holding member 348 is cooled and thermally contracts, or the opposite state arises, are avoided. The optical axis of the laser beam exiting from the light source unit 312 is prevented from becoming offset, and the position at the time when the laser beam travels on the predetermined optical path and is imaged on the photosensitive drum does not fluctuate. In this way a predetermined optical performance is maintained, and an image of high image quality can be formed.

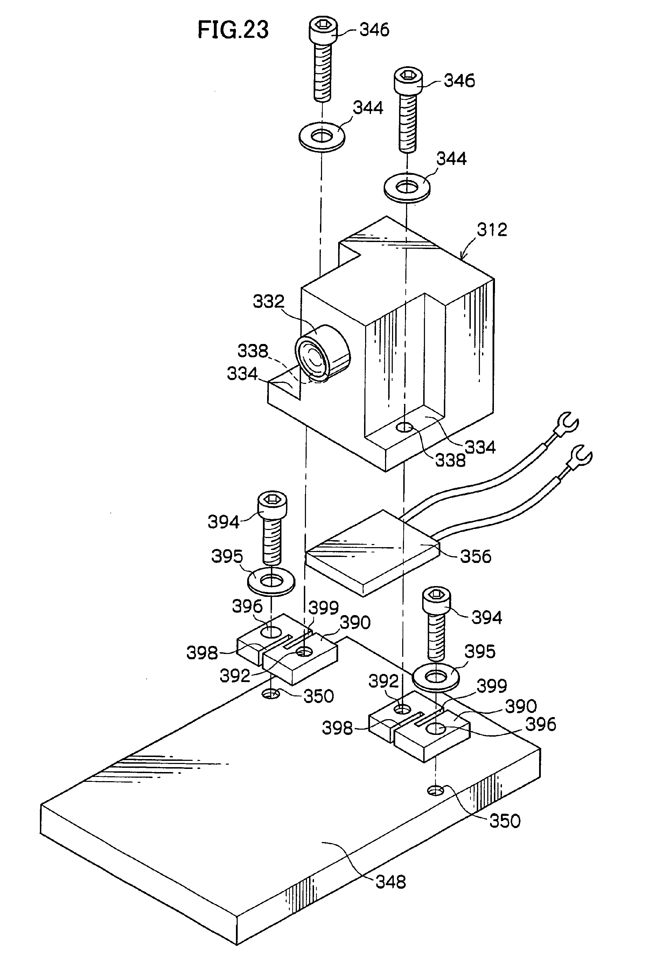

Next, explanation will be given, with reference to Fig. 23, of another structural example relating to the third embodiment of the present invention. In the structural example shown in Fig. 23, slits for structuring a displacement avoiding portion in accordance with thermal stress are provided at thermally insulating, elastically deforming members 390 which are disposed between the light source unit 312 and the holding member 348.

In the structural example of the displacement avoiding portion in accordance with thermal stress shown in Fig. 23, the insert-through holes 338 for fixing are formed in the pedestal portions 334 of the housing of the light source unit 312. Further, the thermally insulating, elastically deforming members 390, which function as spacers for keeping the interval between the holding member 348 and the housing of the light source unit 312 constant and which are for making stress work averagely on the light source unit 312, are disposed so as to correspond to the screw holes 350 of the holding member 348.

The thermally insulating, elastically deforming member 390 is formed as relatively large parallelepiped of a predetermined thickness. A screw hole 392 for fastening the screw part 346, and an insert-through hole 396 through which a screw part 394 is inserted, are formed in a line at the thermally insulating, elastically deforming member 390.

A slit 398, which is open so as to pass between the screw hole 392 and the insert-through hole 396 from one end portion and extend to near the other end portion, and a slit 399, which is open so as to pass between the screw hole 392 and the insert-through hole 396 from the other end portion and extend to near the one end portion, are formed between the screw hole 392 and the insert-through hole 396 at the thermally insulating, elastically deforming member 390. The slit 398 and the slit 399 may be structured by slits of needed configurations which open so as to changeably elastically deform the interval between the screw hole 392 and the insert-through hole 396.

In this structural example shown in Fig. 23 of the displacement avoiding portion in accordance with thermal stress, the respective screw parts 346 are passed through the washers 344, are inserted through the insert-through holes 338 for fixing of the pedestal portions 334 of the housing of the light source unit 312, and are screwed-in and fastened to the screw holes 392 of the thermally insulating, elastically deforming members 390.

Further, the screw parts 394 are passed through washers 395, are inserted through the insert-through holes 396 of the thermally insulating, elastically deforming members 390, and are screwed-in and fastened to the screw holes 350.

In the structural example of the displacement avoiding portion in accordance with thermal stress which is shown in Fig. 23 and structured in this way, when, due to thermal expansion or thermal contraction, the distance between the two screw holes 350 of the holding member 348, and the distance between the insert-through holes 338 for fixing of the pedestal portions 334 at the housing of the light source unit 312, change, the intervals between the screw holes 392 and the insert-through holes 396 are contracted or extended due to the portions of the slits 398 and the slits 399 of the thermally insulating, elastically deforming members 390 elastically deforming averagely in the same way due to stresses which are respectively relatively equal and are weak. In this way, the displacement in the direction of extending or contracting the interval between the insert-through holes 338 for fixing of the two pedestal portions 334 at the housing of the light source unit 312 is offset. The optical axis of the laser beam exiting from the lens barrel 332 of the light source unit 312 is prevented from becoming offset, and the position at the time when the laser beam travels on the predetermined optical path and is imaged on the photosensitive drum does not fluctuate. In this way, a predetermined optical performance is maintained, and an image of high image quality can be formed.

In addition, in the structural example of the displacement avoiding portion in accordance with thermal stress which is shown in Fig. 23 and structured in this way, force in the direction of extending or contracting the interval between the insert-through holes 338 for fixing of the two pedestal portions 334 at the housing of the light source unit 312 can be reduced, and deformation at the light source unit 312 can be kept small.

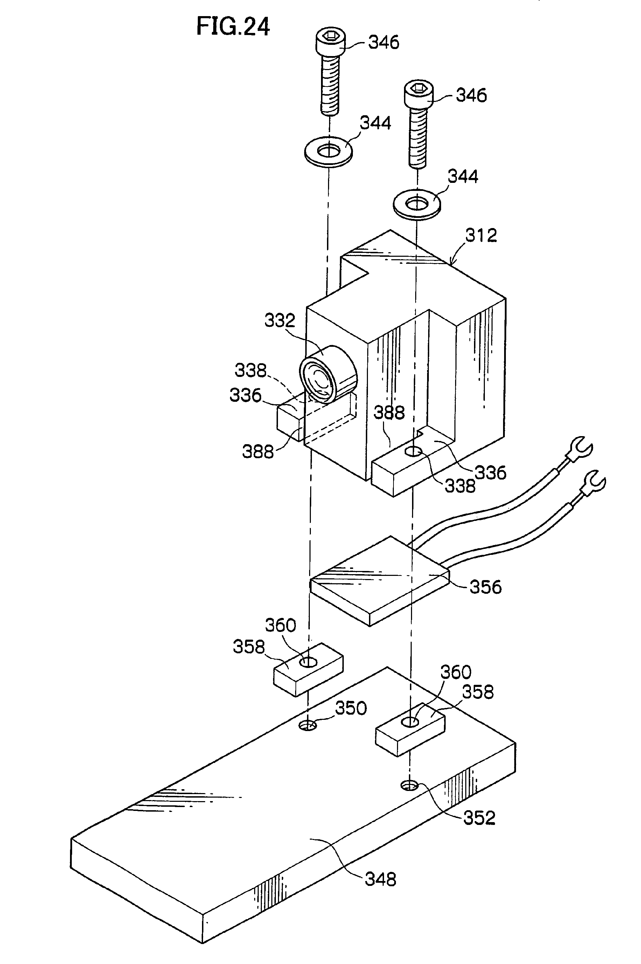

Next, explanation will be given, with reference to Fig. 24, of yet another structural example relating to the third embodiment of the present invention. In the structural example shown in Fig. 24, slits for structuring a displacement avoiding portion in accordance with thermal stress are provided at the housing of the light source unit 312.

In the structural example of the displacement avoiding portion in accordance with thermal stress shown in Fig. 24, the insert-through holes 338 for fixing are formed in both of two pedestal portions 336 of the housing of the light source unit 312. Further, the thermally insulating members 358, which serve as spacers which keep the interval between the holding member 348 and the housing of the light source unit 312 constant, are disposed so as to correspond to the screw hole 350 and a screw hole 352 of the holding member 348.

Further, in the structural example of the displacement avoiding portion in accordance with thermal stress shown in Fig. 24, in order to structure both portions of the two pedestal portions 336 to project out in cantilevered beam shapes with respect to the housing main body of the light source unit 312, slits 388 are formed which are openings which separate predetermined portions between the pedestal portions 336 and side surfaces which are bent from and connected to the front surface at which the lens barrel 332 is provided at the housing of the light source unit 312. Note that the slits 388 may be structured by openings of needed configurations which are formed, between the pedestal portions 336 and the side surfaces of the housing of the light source unit 312, so as to elastically deform the portions of the pedestal portions 336 where the insert-through holes 338 for fixing are provided so as to be able to change the interval between the two insert-through holes 338 for fixing.

In this structural example of the displacement avoiding portion in accordance with thermal stress which is shown in Fig. 24, the respective screw parts 346 are inserted through the insert-through holes 338 for fixing of the corresponding pedestal portions 336 at the housing of the light source unit 312, and through the insert-through holes 360 of the thermally insulating members 358, and are screwed-into the screw hole 350 and the screw hole 352, and thereby fasten the light source unit 312 on the holding member 348.

In the structural example of the displacement avoiding portion in accordance with thermal stress which is shown in Fig. 24 and structured in this way, when, due to thermal expansion or thermal contraction, the distance between the screw hole 350 and the screw hole 352 of the holding member 348, and the distance between the insert-through holes 338 for fixing of the pedestal portions 336 at the housing of the light source unit 312, change, the portions which are cantilevered beams of the both pedestal portions 336 of the housing of the light source unit 312, which are separated by the slits 388, elastically deform averagely in the same way due to stresses which are respectively relatively equal and are weak. In this way, the displacement in the direction of extending or contracting the interval between the insert-through holes 338 for fixing of the two pedestal portions 336 at the housing of the light source unit 312 is offset, and the optical axis of the laser beam exiting from the lens barrel 332 of the light source unit 312 is prevented from becoming offset, and the position at the time when the laser beam travels on the predetermined optical path and is imaged on the photosensitive drum does not fluctuate. In this way, a predetermined optical performance is maintained, and an image of high image quality can be formed.

In addition, in the structural example of the displacement avoiding portion in accordance with thermal stress which is shown in Fig. 24 and structured in this way, force, in the direction of extending or contracting the interval between the insert-through holes 338 for fixing of the two pedestal portions 336 at the housing of the light source unit 312, is reduced at the portions which are the cantilevered beams of the both pedestal portions 336, and deformation at the light source unit 312 can be kept small.

Note that structures, operations and effects in the present third embodiment, other than those described above, are similar to those of the previously-described first embodiment, and therefore, description thereof will be omitted.

The present invention is not limited to the above-described embodiments, and various other structures can of course be adopted within a scope which does not deviate from the gist of the present invention.

## Claims

1. An optical apparatus having a laser light source unit, comprising:
a laser light source unit structured so as to make laser light, which is emitted at a semiconductor laser fixed within a housing, into a laser beam and emit the laser beam;
a holding member to which the housing of the laser light source unit is mounted via a temperature control portion; and
a displacement avoiding portion structured between the holding member and the housing of the laser light source unit, so as to suppress offset of at least an angle of an optical axis of a laser beam emitted from the laser light source unit at a time when temperature control, which maintains the housing of the laser light source unit at a predetermined temperature, is carried out at the temperature control portion.

2. An optical apparatus having a laser light source unit, comprising:
a laser light source unit structured such that a semiconductor laser and a collimator lens are mounted integrally within a housing, and so as to make laser light, which is emitted at the semiconductor laser, into a laser beam converted into parallel light at the collimator lens, and emit the laser beam;
a holding member at which the housing of the laser light source unit is set via a temperature control portion;
a displacement avoiding portion fastened so as to be fixed to the holding member at one point of the housing of the laser light source unit, and fastened movably at another point of the housing; and
a guide portion carrying out guiding such that an optical axis of the laser beam which is emitted is maintained in a state parallel to a set optical path, when the holding member and the housing of the laser light source unit become different temperatures and relative movement arises between the holding member and the housing at a movable fastened portion at the other point of the housing.

3. The optical apparatus having a laser light source unit of claim 2, wherein the displacement avoiding portion is structured so as to fasten the housing and the holding member in a state in which ball bearings are rollably disposed between the housing and the holding member.

4. The optical apparatus having a laser light source unit of claim 2, wherein the displacement avoiding portion is structured so as to fasten the housing and the holding member in a state in which roller bearings are disposed between the housing and the holding member so as to be able to roll along directions of radial lines whose center is one point at which the housing is fixed to the holding member.

5. The optical apparatus having a laser light source unit of claim 2, wherein the displacement avoiding portion fastens the one point and the other point of the housing of the laser light source unit so as to fix the one point and the other point to the holding member, and is structured such that an opening is provided at a portion of the housing such that a distance between the one point of the housing and the other point of the housing can extend and contract.

6. The optical apparatus having a laser light source unit of claim 2, wherein the displacement avoiding portion is fastened at the one point of the housing of the laser light source unit so as to be fixed to the holding member, and is fastened at the other point of the housing to a screw hole of a thermally insulating, elastically deforming member, and is fastened to a screw hole of the holding member due to a screw part being inserted through an insert-through hole formed in the thermally insulating, elastically deforming member, and is structured so as to be provided with an opening which can extend and contract a distance between the screw hole and the insert-through hole at the thermally insulating, elastically deforming member.

7. An image recording apparatus using a semiconductor laser as a light source, comprising:
a laser light source unit having the semiconductor laser which emits laser light;
a base member which fixes the laser light source unit; and
a Peltier element which serves as a temperature control portion and which is disposed between the laser light source unit and the base member,
wherein, the base member is formed so as to be able to elastically deform in accordance with deformation of the Peltier element, in order to structure a displacement avoiding portion.

8. The image recording apparatus of claim 7, wherein the base member at which the Peltier element is disposed is formed to have a plurality of slits.

9. The image recording apparatus of claim 8, wherein the plurality of slits are three slits, and two of the slits are provided in parallel at a width which is wider than two opposing sides of the Peltier element which is rectangular, and one slit is provided so as to connect central portions of the two slits provided in parallel.

10. The image recording apparatus of claim 8, wherein the plurality of slits are provided in a configuration which continuously combines shapes of the letter U.

11. The image recording apparatus of claim 7, wherein the Peltier element is disposed such that a heat absorbing surface faces the laser light source unit.

12. The image recording apparatus of claim 7, wherein a material, which fills-in gaps of an air layer having thermally insulating effect and which makes respective surfaces of contact fit together closely, is disposed between the light source unit and the Peltier element, and between the Peltier element and the base member.

13. The image recording apparatus of claim 7, wherein the base member at which the Peltier element is disposed is structured to be thin-walled as a portion which elastically deforms.

14. The optical apparatus having a laser light source unit of claim 1, wherein the temperature control portion and the displacement avoiding portion are structured by
a plurality of slits for assisting deformation being formed in the holding member, and two elastically deforming beam pedestal portions and a receiving piece portion, which are separated from one another so as to be elastically deformable so as not to affect one another, being structured at the holding member,
the housing of the laser light source unit being fastened to the two elastically deforming beam pedestal portions via respective thermally insulating members, and
a Peltier element being disposed between the housing and the receiving piece portion.

15. The optical apparatus having a laser light source unit of claim 1, wherein the laser light source unit is supported by both sides of the housing being fastened to the holding member via respective thermally insulating, elastically deforming members,
the thermally insulating, elastically deforming members are structured so as to fasten the holding member to one portion and so as to fasten the housing of the laser light source unit to another portion, and
the displacement avoiding portion is structured by forming slits in the thermally insulating, elastically deforming members so as to changeably elastically deform an interval between one fastened portion and another fastened portion.

16. The optical apparatus having a laser light source unit of claim 1, wherein pedestal portions, which are disposed at both sides of the housing of the laser light source unit, are structured so as to be separated by slits and project-out in shapes of cantilevered beams with respect to the housing, and
the displacement avoiding portion is structured such that, when the two pedestal portions respectively elastically deform due to the pedestal portions being fastened to the holding member via respective thermally insulating, elastically deforming members, the displacement avoiding portion can change an interval between a fastened portion of one of the pedestal portions and a fastened portion of another of the pedestal portions.

17. The optical apparatus having a laser light source unit of claim 1, wherein the displacement avoiding portion, which is structured between the holding member and the housing for the laser light source unit, is structured in a shape which is symmetrical with respect to a plane which includes an optical axis of the laser beam emitted from the laser light source unit and which is perpendicular to a holding surface which is a surface of the holding member which holds the laser light source unit.

18. The image recording apparatus of claim 14, wherein the receiving piece portion of the holding member is structured to be thin-walled as a portion which elastically deforms.
